# EUROPÄISCHE PATENTSCHRIFT

(11) **EP 1 792 795 B1**
(45) Veröffentlichungstag und Bekanntmachung des Hinweises auf die Patenterteilung: **26.11.2008**
(21) Anmeldenummer: 06122806.0
(22) Anmeldetag: 24.10.2006
(51) Int. Cl.: B60S 9/08, B60D 1/66

(54) **Höhenverstellbare Stütze für Sattelauflieger oder dergleichen**
Height adjustable support for semitrailers or the like
Support reglable en hauter pour semi-remorque ou systeme similaire

(30) Priorität: 02.12.2005 DE 202005018826 U
(43) Veröffentlichungstag der Anmeldung: 06.06.2007
(73) Patentinhaber: Georg Fischer Verkehrstechnik GmbH, 78224 Singen (DE)
(72) Erfinder: Riedl, Reinhold, 63897, Miltenberg (DE)
(74) Vertreter: Weiss, Wolfgang

(56) Entgegenhaltungen:
- DE-A1- 19 616 704
- DE-U1- 20 307 381
- FR-A- 1 095 463
- JP-A- 3 031 044

## Beschreibung

Die Erfindung bezieht sich auf eine höhenverstellbare Stütze für Sattelauflieger oder dergleichen gemäß dem Oberbegriff des Anspruchs 1. Derartige Stützen sind, in meist paarweiser Anordnung, am vorderen Bereich des Sattelaufliegers angeordnet.

Ein gattungsgemäßes Stützenpaar ist aus der EP 1 104 369 B1 bekannt. Eine solche so genannte Vorrichtung zum Abstützen des Aufliegers eines Sattelschleppers weist ein innenliegendes zweistufiges Zahnradschaltgetriebe für einen Schnellgang und einen Lastgang auf. Dabei wird der Schnellgang bei unbelasteter Stütze zum schnellen Aus- oder Einfahren und der Lastgang zum Anheben oder Absenken des Vorderbereichs des Aufliegers benutzt. Dem Zahnradschaltgetriebe ist ein Kegelradsatz nachgeordnet, dessen Tellerrad auf einer Spindel sitzt. Neben der Ausgestaltung der Stütze für den Handbetrieb wird in dieser Schrift auch eine Ausführung einer Stütze mit Motorantrieb vorgeschlagen, bei der jedoch keine Alternativmöglichkeit zum manuellen Betreiben besteht. Diese Vorrichtung ist entweder, in erster Ausgestaltung nur für den herkömmlichen manuellen Betrieb, oder in einer Alternativversion nur ausschließlich für einen motorischen Betrieb geeignet und deckt daher nicht alle heutigen Anforderungen ab, worauf später eingegangen wird.

In der DE 196 16 704 C2 wird eine Antriebsvorrichtung für die Kombination mit manuell antreibbaren so genannten Sattelstützen beschrieben. Dabei muß ein Umrüstvorgang erfolgen, indem ein zusätzliches Antriebsgetriebe an ein außenliegend an der Stütze befindliches, als Sattelstützengetriebe bezeichnetes, zweistufiges Zahnradschaltgetriebe anzubauen ist, wenn ein motorischer Schnellgang realisiert werden soll. Nach dem Zahnradschaltgetriebe erfolgt der weitere Kraftfluß ebenfalls, wie oben, über einen Kegelradsatz, dessen Tellerrad auf der Spindel angeordnet ist. Das zusätzliche Antriebsgetriebe besteht aufwendigerweise aus einem Antriebsgehäuse mit einer weiteren Zahnradstufe und einem angeflanschten so genannten Antriebsaggregat. Nach der beschriebenen umständlichen Aufrüstung verliert das zweistufige Zahnradschaltgetriebe seine Schaltfunktion. Und außerdem wird, in besonders nachteiliger Weise, dadurch ein manuelles Antreiben der Stütze unmöglich. Ein Handbetrieb ist erst wieder möglich, nach dem das beschriebene Antriebsgetriebe abmontiert und eine Handkurbel angebaut ist. Derartige Umrüstaktivitäten sind während des Betreibens, beim Wechsel vom Handbetrieb zum motorischen Antrieb und umgekehrt, dem Fahrer nicht zumutbar. Aufgrund der aufwendigen und voluminösen Ausführung des Antriebsgetriebes und der, ohne Ab-/Umbaumaßnahmen, ebenfalls nicht vorhandenen Alternative eines Kraftbetriebs sowie eines Handbetriebs, erfüllt auch diese Konzeption nicht alle Anforderungen.

Aus der US 4,097,840 ist ebenfalls eine Sattelaufliegerstütze bekannt. Die dort beschriebene Stütze weist ebenfalls ein außenliegendes Antriebsgetriebe auf. Für den manuellen Betrieb ist auf einer Seite ein Zapfen zum Aufstecken einer Handkurbel vorgesehen und auf der anderen Seite kann der Kraftfluß alternativ von einer zwischen dem Rahmen des Sattelaufliegers eingebauten motorischen Antriebseinheit erfolgen. Die Antriebseinheit besteht sehr aufwendigerweise aus einem Gehäuse mit eingebautem Elektromotor, einem zusätzlichen Reduziergetriebe sowie Kupplungen usw. und ist anordnungsbedingt relativ ungünstig zu montieren.

Eine gattungsgemäße Stütze ist aus dem DE-A-19616704 bekannt.

Die heutigen Sattelschlepper mit luftgefederten Hinterachsen sind in der Lage, über die Druckluftfederbälge am hinteren Achsaggregat, ihr Heck mit der darauf befindlichen Sattelkupplung bezüglich der Sattelhöhe zu regulieren und erforderlichenfalls auch den Vorderbereich eines auch beladenen Sattelaufliegers anzuheben. Um Zeit einzusparen, ist es besonders wichtig die noch unbelasteten Sattelaufliegerstützen möglichst schnell bis zum Boden des Abstellortes auszufahren, bevor der Sattelschlepper abgekoppelt und weggefahren werden kann. Das gleiche gilt für das Aufsatteln, wonach die Stützen wieder schnellstmöglich einzufahren sind. Zum Aufsatteln kann derselbe oder ein ebenfalls mit Luftfederung ausgestatteter Sattelschlepper, nach eventueller Angleichung seiner Sattelhöhe mit dem Heck, unter den abgestellten Sattelauflieger gefahren und angekoppelt werden. Grundsätzlich ist heute daher bei beschriebener Federungs-/Hubtechnik zum Aufsatteln meistens kein höhenmäßiges Angleichen des Vorderbereichs des Sattelaufliegers an die Sattelhöhe des Sattelschleppers mehr erforderlich und somit kein Hubvorgang der Stützen notwendig. Das gilt im besonderen, wenn innerhalb so genannter geschlossener Fuhrparks ausschließlich artgleiche Sattelschlepper bzw. höhenmäßig darauf abgestimmte Sattelauflieger vorhanden sind. In einer Reihe von Grenzfällen jedoch, z.B. beim Einsatz von älteren Sattelschleppern mit Blattfederungen, die quasi fixe Stattelhöhen aufweisen, muß der Sattelauflieger gegebenenfalls durch einen Hubvorgang mittels der Stützen auf die Sattelhöhe des Sattelschleppers gebracht werden.

Im Trend zur Zeit-/Kosteneinsparung sowie der Bedienungserleichterung und insbesondere einer Automatisierung des An- und Abkoppelungsvorgangs der Sattelzüge sind motorisch zu betreibende Sattelaufliegerstützen unumgänglich. Andererseits muß bei diesen Stützen eine Möglichkeit zum Handantrieb bestehen. Diese Notwendigkeit ergibt sich sowohl aufgrund der geschilderten eventuellen Erfordernis eines Höhenangleichs von Sattelaufliegern, als auch eines möglichen Defekts des Kraftantriebs. Nur so kann bei heutiger Transportlogistik (z.B. just in time) das Ausfallrisiko von Sattelaufliegern vermieden werden.

Der Erfindung liegt die Aufgabe zugrunde eine Stütze für Sattelauflieger zu schaffen bei der mit sehr geringem Aufwand ein Motorantrieb realisiert wird und die im Einsatz alternativ motorisch oder manuell betreibbar ist, wobei wie herkömmlich, für den Handbetrieb eine Umschaltmöglichkeit in den Schnell- oder den Lastgang besteht.

Diese Aufgabe ist erfindungsgemäß durch die im Anspruch 1 gekennzeichnete Stütze gelöst.

Für die erfindungsgemäße Stütze wird vorgeschlagen vorzugsweise an der Rückseite eines, bekanntermaßen am Stützenaußenrohr angebrachten Zahnradschaltgetriebes - welches in handelsüblicher Art ein auf der Abtriebswelle befestigtes durchmessergroßes Zahnrad sowie ein durchmesserkleines Zahnrad aufweist und auf der axialverschiebbaren Handantriebswelle sitzend ein durchmesserkleines Zahnrad, sowie ein durchmessergroßes Zahnrad besitzt - einen Motor anzubringen, der ein Zahnritzel antreibt, das in das durchmessergroße Zahnrad der Abtriebswelle eingreift.
Die Motorbefestigung kann vorteilhaft am Gehäuse des Zahnradschaltgetriebes, das bekannterweise schräg am Stützenaußenrohr angebracht ist erfolgen. Zur Paarung mit dem Motorritzel ist erfindungsgemäß, kostengünstiger Weise kein zusätzliches Zahnrad erforderlich. Außerdem baut diese Ausgestaltung sehr kompakt, wenn der Motor geschützt zwischen dem Zahnradschaltgetriebe und der Anschraubplatte sitzt.
Es ist vorteilhaft den Achsabstand zwischen der Welle des Motors und der Abtriebswelle des Zahnradschaltgetriebe möglichst klein zu gestalten, damit unter Beibehaltung der handelsüblichen Größe des durchmessergroßen Zahnrades auf der Abtriebswelle das Zahnritzel am Motor klein wird, womit ein großes Untersetzungsverhältnis zu bewerkstelligen ist und wirtschaftlicherweise ein Motor mit nur geringer Leistung erforderlich ist. Um das zu begünstigen kann das Zahnradschaltgetriebe auch anstatt der bisherigen Schrägstellung in einer Anordnung bis zur Horizontallage am Stützenaußenrohr angebracht werden. Es kann auch vorteilhaft sein das Stützenaußenrohr in Motornähe durch eine Teilabschrägung der oberen Stirnseite oder einer örtlichen Verjüngung dem Platzbedarf des Motors gemäß zu modifiziert werden. Schließlich kann ein Motor zum Einsatz kommen, dessen Zylinderkörper abgeflacht ist.

### Vorteilhafte Ausgestaltungen der Erfindung gehen aus den Unteransprüchen hervor.

Die Erfindung wird anschließend anhand der Zeichnungen erläutert.

Es zeigen:
- **Fig. 1**: eine Frontansicht der erfindungsgemäßen Stütze,
- **Fig. 2**: eine Seitenansicht der in Fig.1 gezeigten Stütze,
- **Fig. 3**: einen Längsschnitt der in Fig.1 gezeigten Stütze entlang der Linie A-A, in schematischer Darstellung.

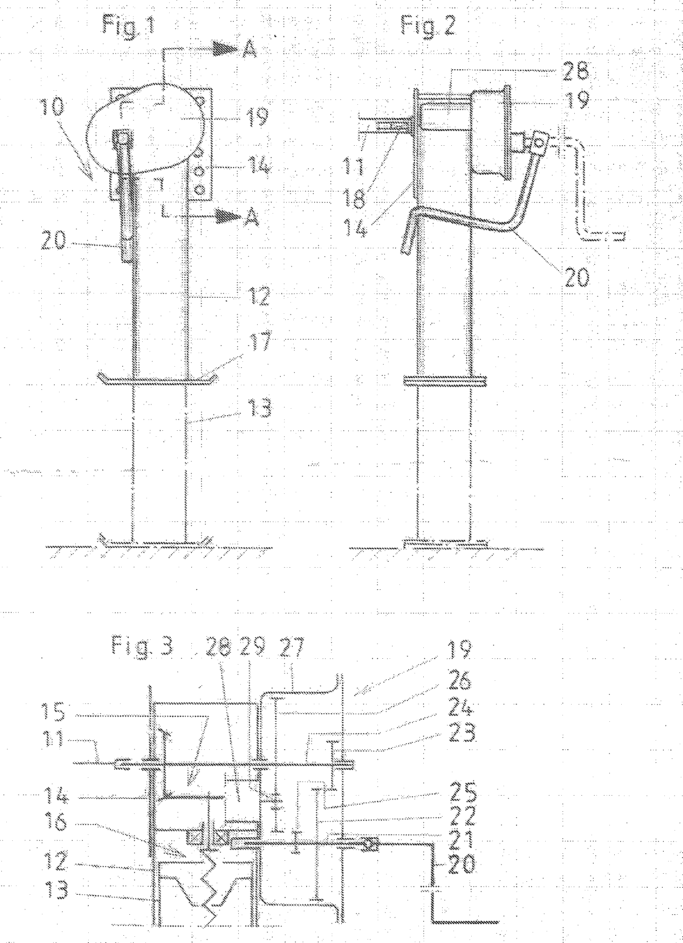

Die in Fig. 1 bis 3 gezeigte Stütze **10** wird paarweise am Chassis eines Sattelaufliegers in dessen vorderen Bereich befestigt und ist in Transportstellung eingefahren, d.h. in verkürztem Zustand. Bevor der Sattelauflieger vom Sattelschlepper abgekuppelt wird, werden die Stützen **10** ausgefahren.
Da die Stützen **10** eines jeden Paares nahezu identisch sind bzw. weil die in der Regel von einer ersten Stütze **10** aus über eine Verbindungswelle **11** mitangetriebene zweite Stütze **10** üblicherweise nur getriebemäßig einfacher ausgestaltet ist, d.h. lediglich eine Kegelradstufe besitzt, genügt es eine antriebseitige Stütze **10** zu beschreiben.
Die Stütze **10** weist ein Stützenaußenrohr **12** und ein darin längsverschiebbar gelagertes Innenrohr **13** auf. Das Stützenaußenrohr **12** und das Stützeninnenrohr **13** besitzen vorzugsweise quadratische Querschnitte. Die Stütze **10** wird über eine am Stützenaußenrohr **12** sitzende Anschraubplatte **14** am Sattelaufliegerrahmen befestigt. Die Stütze **10** weist einen Kegelradsatz **15** sowie einen nachgeodneten Spindeltrieb **16** auf, an dessen Mutter das Stützeninnenrohr **13** befestigt ist. Am unteren Ende des Stützeninnenrohres **13** ist ein Fuß **17** zum Aufsetzen auf den Boden angebracht. Auf einer Getriebeausgangswelle **18,** die in den Rohrwänden des Stützenaußenrohrs **12,** gelagert ist, ist eine hohle Verbindungswelle **11** formschlüssig aufgesteckt, über welche die zweite Stütze **10** mitangetrieben wird. An der Vorderseite der Stütze **10** befindet sich ein Zahnradschaltgetriebe **19.**
Das Zahnradschaltgetriebe **19** entspricht einer handelsüblichen Ausführung und weist zwei Zahnradstufen auf, von denen eine Übersetzung ins Schnelle, als Schnellgang und die andere eine solche ins Langsame, als Lastgang bewirkt. Der Schnellgang erfolgt mittels einer abklappbaren Hankhurbel **20** über ein auf einer Antriebswelle **21** sitzendes durchmessergroßes Zahnrad **22** auf ein durchmesserkleines Zahnrad **23,** welches auf einer Abtriebswelle **24** drehfest ist. Im Lastgang treibt ein auf der Antriebswelle **21** fixiertes weiteres durchmesserkleines Zahnrad **25** ein auf der Abtriebswelle **24** sitzendes weiteres durchmessergroßes Zahnrad **26** an. Zwischen den beiden Zahnradstufen ist eine Freigangstellung vorhanden. Die Schaltung von der Freigangstellung in den Schnell- oder in den Lastgang und umgekehrt erfolgt durch eine entsprechende axiale Verschiebung der Antriebswelle **21** an der Handhurbel **20.** Von der Antriebswelle **21** aus erfolgt der Kraftfluß jeweils über den Kegelradsatz **15** auf den Spindeltrieb **16.**
Außen an der Rückwand des Gehäuses **27** des Zahnradschaltgetriebes **19** ist ein Motor **28** angeflanscht. Am Antriebszapfen des Motors **28** sitzt ein Zahnradritzel **29,** das in das Gehäuse **27** des Zahnradschaltgetriebes **19** hineinragt und in das weitere durchmessergroße Zahnrad **26** eingreift. Wenn das Zahnradschaltgetriebe **19** in Freigangstellung geschaltet ist, kann der Motorbetrieb der Stütze **10** durch Einschalten des Motors **28** erfolgen.

### Bezugszeichenliste

- **10**: Stütze
- **11**: Verbindungswelle
- **12**: Stützenaußenrohr
- **13**: Stützeninnenrohr
- **14**: Anschraubplatte
- **15**: Kegelradsatz
- **16**: Spindeltrieb
- **17**: Fuß
- **18**: Getriebeausgangswelle
- **19**: Zahnradschaltgetriebe
- **20**: Handhurbel
- **21**: Antriebswelle
- **22**: Zahnrad
- **23**: Zahnrad
- **24**: Abtriebswelle
- **25**: Zahnrad
- **26**: Zahnrad
- **27**: Gehäuse
- **28**: Motor
- **29**: Zahnritzel

## Patentansprüche

1. Höhenverstellbare Stütze (**10**) für Sattelauflieger oder dergleichen mit einem ortsfest angebrachten Stützenaußenrohr (**12**), einem darin längsverschiebbar angeordneten Stützeninnenrohr (**13**), sowie einem in der Stütze (**10**) befindlichen Spindeltrieb (**16**), der über einen Kegelradsatz (**15**) angetrieben wird und einem vorgelagerten außensitzenden Zahnradschaltgetriebe (**19**) mit einer Handkurbel (**20**) zum Antreiben im Schnellgang über ein durchmessergroßes Zahnrad (**22**), das auf der Antriebswelle (**21**) sitzt auf ein durchmesserkleines Zahnrad (**23**) das auf der Abtriebswelle (**24**) sitzt und zum Betreiben im Lastgang über ein weiteres durchmesserkleines Zahnrad (**25**), das auf der Antriebswelle (**21**) sitzt, auf ein weiteres durchmessergroßes Zahnrad (**26**), das auf der Abtriebswelle (**24**) sitzt, sowie einer Freigangstellung, wobei ein motorischer Antrieb vorhanden ist, bei dem der Motor (**28**) auf der Rückseite des außen am Stützenaußenrohr (**12**) sitzenden Zahnradschaltgetriebes (**19**) angeordnet ist, und der Motor (**28**) direkt ein Zahnritzel (**29**) antreibt, **dadurch gekennzeichnet, daß** zusätzlich zu dem in das weitere durchmessergroße Zahnrad (**26**) des Zahnradschaltgetriebes (**19**) einschaltbares weiteres durchmesserkleines Zahnrad (**25**) das Zahnritzel in das weitere durchmessergroße Zahnrad (**26**) auf der Abtriebswelle (**24**) des Zahnradschaltgetriebes (**19**) eingreift und alternativ zum Handantrieb, der über das weitere durchmesserkleine Zahnrad (**25**) erfolgt, das weitere durchmessergroße Zahnrad (**26**) antreibt.

2. Stütze nach Anspruch 1 **dadurch gekennzeichnet, daß** das Stützenaußenrohr (**12**) im Bereich des Motors (**28**) eine stirnseitige Teilabschrägung oder eine örtliche Verjüngung seines Querschnitts aufweist.

3. Stütze nach Anspruch 1 **dadurch gekennzeichnet, daß** der Motor (**28**) achsparallel abgeflacht ist.

4. Stütze nach Anspruch 1 **dadurch gekennzeichnet, daß** das Zahnradschaltgetriebe (**19**) in horizontaler Anordnung am Stützenaußenrohr (**12**) angebracht ist.

## Claims

1. Height-adjustable support (**10**) for semitrailers or the like, comprising a fixedly attached support outer tube (**12**), a support inner tube (**13**) arranged in a longitudinally displaceable manner therein, as well as a jack screw actuator (**16**), which is located in the support (**10**) and is driven via a bevel gear set (**15**), and an upstream-situated external speed-change gear mechanism (**19**) with a crank handle (**20**) for driving in the high-speed gear, via a large-diameter gearwheel (**22**) seated on the drive shaft (**21**), a small-diameter gearwheel (**23**) seated on the power take-off shaft (**24**), and for operating in the low-speed gear, via a further small-diameter gearwheel (**25**) seated on the drive shaft (**21**), a further large-diameter gearwheel (**26**) seated on the power take-off shaft (**24**), and further comprising a freewheel setting, wherein a motorized drive is present, in which the motor (**28**) is disposed on the rear side of the speed-change gear mechanism (**19**) seated on the support outer tube (**12**), and the motor (**28**) directly drives a toothed pinion (**29**), **characterized in that**, in addition to the further small-diameter gearwheel (**25**) which can be engaged in the further large-diameter gearwheel (**26**) of the speed-change gear mechanism (**19**), the toothed pinion engages in the further large-diameter gearwheel (**26**) on the power take-off shaft (**24**) of the speed-change gear mechanism (**19**), and alternatively to the manual operation, which is realized via the further small-diameter gearwheel (**25**), drives the further large-diameter gearwheel (**26**).

2. Support according to Claim 1, **characterized in that** the support outer tube (**12**), in the region of the motor (**28**), has an end-face part-chamfering or a local tapering of its cross section.

3. Support according to Claim 1, **characterized in that** the motor (**28**) is flattened parallel to the axis.

4. Support according to Claim 1, **characterized in that** the speed-change gear mechanism (**19**) is attached to the support outer tube (**12**) in horizontal arrangement.

## Revendications

1. Support réglable en hauteur (10) pour semi-remorques ou similaires, comprenant un tube de support extérieur (12) monté fixement, un tube de support intérieur (13) disposé dans celui-ci de manière déplaçable longitudinalement, ainsi qu'un entraînement à broche (16) se trouvant dans le support (10), lequel est entraîné par le biais d'un jeu de pignons coniques (15), et une transmission à engrenage (19) disposée à l'extérieur et montée en amont, avec une manivelle à main (20) pour agir, pour une surmultiplication, par le biais d'une roue dentée de grand diamètre (22) qui repose sur l'arbre d'entraînement (21), sur une roue dentée de petit diamètre (23), qui repose sur l'arbre de sortie (24), et pour agir, pour une démultiplication, par le biais d'une autre roue dentée de petit diamètre (25), qui repose sur l'arbre d'entraînement (21), sur une autre roue dentée de grand diamètre (26), qui repose sur l'arbre de sortie (24), et avec une position de libération, un entraînement par moteur étant prévu, le moteur (28) étant disposé sur le côté arrière de la transmission à engrenage (19) disposée à l'extérieur sur le tube de support extérieur (12), et le moteur (28) entraînant directement un pignon denté (29), **caractérisé en ce qu'**en plus de l'autre roue dentée de petit diamètre (25) pouvant être enclenchée dans l'autre roue dentée de grand diamètre (26) de la transmission à engrenage (19), le pignon denté vient en prise dans l'autre roue dentée de grand diamètre (26) sur l'arbre de sortie (24) de la transmission à engrenage (19) et entraîne, au lieu de l'entraînement manuel, qui s'effectue au moyen de l'autre roue dentée de petit diamètre (25), l'autre roue dentée de grand diamètre (26).

2. Support selon la revendication 1, **caractérisé en ce que** le tube de support extérieur (12) présente, dans la région du moteur (28), un chanfrein partiel du côté frontal, ou un rétrécissement local de sa section transversale.

3. Support selon la revendication 1, **caractérisé en ce que** le moteur (28) est aplati parallèlement à son axe.

4. Support selon la revendication 1, **caractérisé en ce que** la transmission à engrenage (19) est montée sur le tube de support extérieur (12) dans un agencement horizontal.
